# EUROPÄISCHE PATENTSCHRIFT

(11) **EP 0 658 581 B1**
(45) Veröffentlichungstag und Bekanntmachung des Hinweises auf die Patenterteilung: **11.09.2002**
(21) Anmeldenummer: 94117522.6
(22) Anmeldetag: 07.11.1994
(51) Int. Cl.: C08G 18/66, D06N 3/14

(54) **Knisterfreie, antistatische Polyurethanfolie mit hoher Atmungsaktivität sowie ihre Verwendung**
Non-crackling, antistatic polyurethane film having high breathability, and its use
Feuille de polyuréthane antistatique ne produisant pas des crépitements et ayant une preméabilité au gaz élevée et son utilisation

(30) Priorität: 19.11.1993 DE 4339475
(43) Veröffentlichungstag der Anmeldung: 21.06.1995
(73) Patentinhaber: WOLFF WALSRODE AG, 29655 Walsrode (DE)
(72) Erfinder: Schultze, Dirk, Dr., D-29683 Fallingbostel (DE); Hargarter, Nicole, Dipl.-Ing., D-29640 Schneverdingen (DE); Funk, Hans-Werner, D-29699 Bomlitz (DE); Kunold, Reinhard, Dipl.-Ing., D-29664 Walsrode (DE)
(74) Vertreter: Pettrich, Klaus-Günter, Dr.

(56) Entgegenhaltungen:
- EP-A- 0 052 915
- WO-A-90/00180
- DE-A- 4 038 705
- DE-B- 1 226 071
- US-A- 5 047 456
- DATABASE WPI Week 9232, Derwent Publications Ltd., London, GB; AN 264409 'WATER PERMEABLE POLYURETHANE RESINS FOR WATERPROOF FABRICS' & JP-A-4 180 913 (TOYO RUBBER) 29. Juni 1992

## Beschreibung

Die vorliegende Erfindung betrifft durch Extrusion hergestellte, knisterfreie, wasserdichte, atmungsaktive und antistatische Folien aus thermoplastischen Polyurethanen, deren kennzeichnende Merkmale darin bestehen, dass die Folie selbsttragend aus der Schmelze des thermoplastischen Polyurethans herstellbar ist, das verwendete thermoplastische Polyurethanharz einen Erweichungsbereich ≥140°C besitzt und die Folie bevorzugt ein Antiblock und/oder ein Gleitmittel enthalten kann sowie einen Oberflächenwiderstand <10¹² Ohm besitzt.

Sie betrifft ebenso die Verwendung der erfindungsgemäßen Folien zur dichten Abdeckung von porösen textilen Flächengebilden wie Webwaren und von Vliesen sowie daraus hergestellter Gebrauchsgegenstände gegen Mikroben und deren Stoffwechselprodukte insbesondere zur Verringerung und/oder Vermeidung allergener Belastungen.

Ferner betrifft sie den Einsatz solcher Folien zur wasserdichten Abdeckung von porösen Flächengebilden, besonders von textilen Webwaren und Vliesen insbesondere durch Kaschierung auf diesen Materialien.

Es ist bereits allgemein bekannt, dass Textilien, textile Webwaren oder ähnliche poröse Flächengebilde durch Ausrüstung mit einer wasserdichten Folie oder Beschichtung gegen das Eindringen bzw. Durchdringen von Wasser undurchlässig ausgestattet werden.

Folien beziehungsweise dauerhaft selbsttragende Filme lassen sich kontinuierlich aus Lösung oder Schmelze eines hochmolekularen Polymer-Harzes herstellen.

Außerdem ist die Herstellung von Folien durch das reaktive Verbindungen niedermolekularer Komponenten, allgemein auf einem Träger ausgeführt, wie in der EP 0282 771 beschrieben, möglich.

Um ein hohes Maß an Tragekomfort zu gewährleisten, werden bevorzugt klima- oder atmungsaktive Materialien zur Abdichtung von textilen Flächengebilden eingesetzt. Die Wasserdampfdurchlässigkeit solcher Materialien muss jedoch sehr hoch sein, um zu verhindern, dass der Träger solchermaßen ausgerüsteter Textilien schwitzt. Auch wird der klima- beziehungsweise atmungsaktive Charakter einer Folie üblicherweise über die Wasserdampfdurchlässigkeit nachgewiesen. Eine hohe Wasserdampfdurchlässigkeit zeigt eine gute Atmungsaktivität an, während eine niedrige Wasserdampfdurchlässigkeit eine nur ungenügende Atmungsaktivität aufzeigt.

Weiterhin ist es bekannt, dass mikroporöse Bahnen, beispielsweise aus dünnen Polytetrafluorethylenfolien, die durch biaxiales Verstrecken mikroporös eingestellt werden, eine hohe Wasserdampfdurchlässigkeit besitzen. Derartige Folien sind beispielsweise in der US 4.194.041 beschrieben. Die Nachteile derartiger Bahnmaterialien sind neben ihrer mangelnden Elastizität, beziehungsweise ihrer mangelnden elastischen Rückstellfähigkeit, ihre geringe mechanische Stabilität und ungenügende Abriebfestigkeit. Zudem sind solche Folien nicht thermoplastisch verarbeitbar, ohne, dass eine vollständige Veränderung des Eigenschaftsbildes eintritt.

In der DE 40 38 705 werden Polyurethan-Beschichtungssysteme beschrieben, die als reaktive Prepolymere auf Trägermaterialien aufgetragen und auf dem Träger vernetzt werden. Aus derartigen Materialien gebildete Flächengebilde weisen den Nachteil auf, dass sie nach dem Filmbildungsprozess thermisch nicht weiter verformt werden können.

Porenfreie Filme mit hoher Atmungsaktivität werden aber benötigt, wenn der Film neben hohen Durchlässigkeiten auch gute mechanische Festigkeiten aufweisen soll. Ebenso werden für den Einsatz im Bereich von Medizin- oder Hygiene-Anwendungen bevorzugt porenfreie Folien zum Einsatz gebracht, um die Kontamination mit oder den Durchtritt von Mikroorganismen oder Verschmutzungen auszuschließen. Das zunehmende Auftreten allergischer Reaktionen, im häuslichen Bereich insbesondere durch Milben beziehungsweise deren Stoffwechselprodukte hervorgerufen, macht die Abdichtung textiler Bahnen gegen allergene Substanzen erforderlich. Hier bieten auch die Herstellung von koagulierten Folien aus Lösung keine ausreichende Gewähr vor der Entstehung von Poren.

Ebenso sind Poren- und Fehlstellen-freie Filme notwendig, wenn diese mit einem Polyurethan-Reaktiv-Schaumsystem hinterschäumt werden und dabei entweder zur Verhinderung des Durchtretens von Schaum oder aber zur Abdichtung vorgefertigter poröser oder löchriger Flächenbahnen eingesetzt werden. Nichtporöse Filme werden bevorzugt aus der Schmelze hergestellt. Das Beschichten auf Trägermaterialien bietet, wie in der EP 0295694 dargestellt, keine ausreichende Gewähr für einen porenfreien Charakter der Folie. Sollen durch einen solchen Prozess dichte Schichten hergestellt werden, so sind sehr hohe Schichtdicken erforderlich, die wiederum die Atmungsaktivität eines solchen Laminates beeinträchtigen. Deshalb sollte das folienbildende Harz zu einem selbsttragenden Film formbar sein.

Die Verarbeitung aus der Schmelze ist zudem von Vorteil, da es aus der einschlägigen Fachliteratur bekannt ist, dass bei gleichem Material die Verarbeitung aus der Schmelze zu höheren Wasserdampfduchlässigkeiten führt, als eine Verarbeitung aus Lösung. Diese Tatsache ist beispielsweise von Komerska in; Journal of Plastic Film Sheeting, (1987) 58-64, dargelegt.

Kunststoff-Folien weisen oftmals den Nachteil auf, dass sie sich beim Reiben gegeneinander oder aber gegen andere Materialien statisch aufladen. Nachfolgende Entladungen, die vom Anwender als Knistern oder auch als elektrische Schläge wahrgenommen werden, können das Wohlbefinden des Anwenders stören. Solche Folien bedürfen einer zusätzlichen antistatischen Ausrüstung. Diese erfolgt allgemein durch Additive, die von der Folienoberfläche entfernt werden können, was als Nachteil empfunden wird. Antistatika für die Verwendung in oder auf Kunststoff-Folien sind unter anderem von Lehmann in: Kunststoffe, 82(1992) 991-992, aber auch Pfahler in: Gächter, Müller (Hrsg.): Kunststoff-Additive, 3. Ausgabe, Hanser Verlag, München (1989), S. 779-805 beschrieben.

Aus der EP 0 111 360 sind Folien aus thermoplastisch verarbeitbaren Copolyetherelastomeren bekannt, die eine hohe Atmungsaktivität bei gleichzeitiger Wasserdichtigkeit bieten können. Im medizinischen und hygienischen Bereich gibt es jedoch Anforderungen, denen diese Folien nicht gerecht werden. Hierzu zählt die mangelnde Flexibilität, die sie hinsichtlich der Einstellung ihrer mechanischen Eigenschaften bieten. Besitzen die Folien ein genügendes Maß an Festigkeit, so sind sie auch vergleichsweise steif. Werden solche Folien flexibel und elastisch mit hohem Rückstellvermögen eingestellt, so ist ihre Festigkeit für einen dauerhaften selbsttragenden Einsatz nicht ausreichend.

Außerdem ist es bekannt, dass diese Folien bei Bewegung zum Rascheln und Knistern neigen. Die Geräuschentwicklung kann das Wohlbefinden des Anwenders erheblich beeinträchtigen. Zudem sind die am Markt angebotenen Rohstofftypen vergleichsweise teuer. Gleiches gilt, wenn statt des Copolyetheresters ein Copolyetherblockamid zur Folienherstellung herangezogen wird.

Thermoplastisch verarbeitbare Polyurethane gehören in die Stoffklasse der thermoplastischen Elastomeren. Diese umfasst im allgemeinen Copolymere, deren Eigenschaftsbilder sich aus der Verknüpfung der jeweiligen Eigenschaften der einzelnen Komponenten ergeben. Große Bedeutung haben in dieser Stoffklasse die Blockcopolymere erlangt. Eine informative Übersicht über diese Stoffklasse gibt Legge in: Rubber Chemistry and Technology 62 (1989) 529-547.

Die thermoplastischen Polyurethane weisen trotz ihres elastischen Charakters sowohl hohe mechanische Festigkeiten als auch eine gute chemische Beständigkeit auf. Die drei Basiskomponenten der thermoplastischen Polyurethane sind Diisocyanate, kurzkettige Diole - auch als Kettenverlängerer bezeichnet - und langkettige Diole. Diisocyanate und Kettenverlängerer bilden das sogenannte Hartsegment, welches vor allem die Festigkeit des thermoplastischen Polyurethans bestimmt. Das den elastischen Anteil des Blockcopolymeren tragende Weichsegment wird aus den langkettigen Diolen gebildet. Die Auswahl des Weichsegments ist unter anderem für die chemische Beständigkeit des thermoplastischen Polyurethans von Bedeutung.

Bei den handelsüblichen thermoplastischen Polyurethanen wird allgemein eine Verknüpfung guter Festigkeitswerte, d.h. Zug- und Weiterreißfestigkeit, mit großer Elastizität, also große Dehnfähigkeit und Kälteflexibilität, angestrebt. Einen Überblick über die thermoplastischen Polyurethane geben Goyert und Hespe in: Kunststoffe 68 (1978) 819-825 oder Hepburn (Hrsg.): Polyurethane Elastomers, Applied Science Publishers, Barking (1982), S. 49-80.

In der einschlägigen Fachliteratur sind auch hydrophile, wasserdampfdurchlässige Polyurethan-Klebstoff- oder -Beschichtungs-Systeme bekannt, wie unter anderem in der WO 90/00969 oder der DE 4 038 705 beschrieben. Diese eignen sich jedoch nicht zur Ausbildung der geforderten, selbsttragend hergestellten elastischen Filme aus der Schmelze. Bedingt durch das Auftrags-/Verarbeitungsverfahren genügen die KlebstoffSysteme nicht den Anforderungen nachträglicher Verschweiß- oder Thermokaschierbarkeit. Sie sind nach dem Auftrag nicht mehr einem nachfolgenden Formgebungsverfahren zu unterziehen. Derartige Polyurethan-Rezepturen weisen eine sehr hohe Blockigkeit der Oberfläche auf. Sie sind oftmals hinsichtlich einer guten Oberflächenhaflung optimiert. Auch die in der WO 9000-180 oder der japanischen Patentschrift J 03203-920 beschriebenen Harze aus Polyurethanen lassen sich nur mit einem Trägerfilm herstellen bzw. aufwickeln, um zu vermeiden, dass die hergestellten Filme auf dem Wickel verblocken.

In der JP-A-4 180 913 (WPI 92-264 409) werden Harzsysteme beschrieben, bei denen ein mittleres Molekulargewicht von 1 000 bis 5 000 g/mol eingestellt wird. Diese Harzsysteme, deren Weichsegmente ein Kohlenstoff zu Sauerstoff-Massenverhältnis von 2,8 und größer aufweisen, sind zur Herstellung selbsttragender Folien nicht geeignet.

Die EP-A-52 915 betrifft atmungsaktive PU-Folien, wobei die mechanischen Eigenschaften mittels einer Vernetzung der Moleküle verbessert werden können. Ein vernetztes Material ist aber kein thermoplastisches Polyurethanelastomer mehr.

Die Beschichtungssysteme weisen den Nachteil einer zu niedrigen Viskosität auf, so dass sich diese Typen nicht für die selbstragende Herstellung von Folien eignen. Schwierigkeiten erwachsen aus der nicht aureichenden Zähigkeit der Schmelze. Letztere lässt sich durch den Schmelzfluss-Index (Melt-Flow-Rate: MFR) charakterisieren. Hohe MFR-Wert stehen für eine hohe Fließneigung, niedrige MFR-Werte für eine hohe Zähigkeit der Schmelze. Die MFR-Werte solcher Polyurethan-Harze liegen so hoch bzw. die Viskosität solcher Harze ist, bedingt durch relativ kurze Molekülketten, so niedrig, dass die Molekülketten aneinander abgleiten und der aus der Werkzeugdüse tretende Schmelzefilm nicht durch Entanglements, d.h. Verschlaufungen der das Polymer bildenden Molekülketten, stabilisiert wird. Die Verschlaufungsdichte wächst mit zunehmendem Molekulargewicht, beziehungsweise steigt mit einer zunehmenden Kettenlänge der das Harz bildenden Moleküle. Das Abgleiten der Ketten kann auch durch systematische Verzweigungen im Molekülaufbau vermindert werden. Solche Verzweigung-oder Netzstellen verändern jedoch auch das Erweichungs- und Schmelzverhalten, weshalb ihr Einsatz bei thermoplastischen Polyurethanen zumeist unerwünscht ist. Materialien mit hohen MFR-Werten lassen sich nur durch Beschichtung auf Trägerbahnen zu Folien oder Filmen verarbeiten.

Im Freizeit-Bekleidungs-Sektor werden neuerdings vielfach elastische Gewebe eingesetzt, die dem Träger einen erhöhten Tragekomfort besonders bei Bewegung gewähren, indem sie sich flexibel an die anatomischen Gegebenheiten anpassen. Elastische Gewebe sind in der Lage, sich in hohem Maße zu verformen und können sich dadurch auch den oft anisotropen Belastungen durch Körperbewegungen flexibel anpassen, ohne dass es zu Verschiebungen oder einem Verrutschen des Textils kommt. Solche Gewebe werden oftmals unter Verwendung elastischer Polyurethan-Fasern hergestellt. Um eine solche dynamische Anpassung an Bewegungen zu ermöglichen, ist es nötig, dass die Folie bei nur geringem Kraftaufwand durch Dehnung auf äußere Belastungen reagieren kann. Da die aus der EP 0111360 bekannten Folien für den Einsatz in Regenbekleidungstextilien diese elastische Verformung aufgrund ihrer Steifigkeit bzw. mangelnden Festigkeit nicht reversibel nachvollziehen können, konnten Sport- und Freizeittextilien nicht mit wasserfester Folie mit entsprechend großer Elastizität aufgestattet werden.

Für einen gesteigerten Tragekomfort ist es zusätzlich von Bedeutung, dass die zu schaffende Folie bei Bewegungen nicht raschelt oder knistert und somit den Träger oder Anwender durch Geräusche irritiert. Außerdem sollte die Folie einen Oberflächenwiderstand besitzen, der so gering ist, dass die Folie ein antistatisches Verhalten zeigt oder die Dissipation statischer Elektrizität erlaubt. Nach Vanhaelen liegt die Grenze zwischen antistatischem und statischer Elektrizität dissipieredem Verhalten bei 10¹² Ohm wie er es in: World Plastic and Rubber Technology 1990, Cornhill Publications, London, S. 31-32, beschreibt.

Thermoplastische Elastomere sind dafür bekannt, dass sie bei der Verarbeitung aus der Schmelze sehr glatte Oberflächen bilden. Solche Oberflächen bewirken ein hohes Niveau der Haftreibung. Diese als Blocken bekannte Hemmung der Gleitbewegung muss verhindert werden, um einen angenehmen Tragekomfort zu ermöglichen.

Daher stellte sich die Aufgabe, eine knisterfreie, elastische, wasserdichte, aber zugleich atmungsaktive Folie mit hoher Widerstandskraft gegen mechanische Beschädigungen bereitzustellen. Diese Folie sollte zudem aufgrund ihrer glatten Oberflächen gut zu reinigen sein und gleichzeitig in Mindestmaß an Oberflächenrauhigkeit bieten, welches ein blockfreies Gleiten der Folie auf einem Substrat ermöglicht. Ihr elektrischer Oberflächenwiderstand sollte 10¹² Ohm nicht überschreiten.

Im Rahmen der Weiterentwicklung und Verbesserung bestehender Foliensysteme für Medizin- und/oder Hygiene-Anwendungen, aber auch für die Abdeckung elastischer Gewebe sollte eine atmungsaktive Folie geschaffen werden, die sich besonders den durch Körperbewegungen hervorgerufenen Verformungen elastisch anpassen kann.

Um ein hohes Maß an Dichtigkeit gegen Wasser, aber auch Mikroorganismen bzw. deren Stoffwechselprodukte sicherzustellen, musste die Herstellung einer selbsttragenden Folie aus der Schmelze erfolgen und sollte nicht aus Lösung koaguliert oder auf einem Träger beschichtet werden. Zudem musste gewährleistet sein, dass die Folie nach der Herstellung mit sich selbst verschweißt werden kann, so dass auch dichte Formteile aus ihr erstellt werden können.

Ein weiteres Ziel der Erfindung war es, eine Folienrezeptur bereitzustellen, die es ermöglicht, Folien fertigungstechnisch flexibler herzustellen sowie durch den Einsatz kostengünstigerer Rohstoffe die Folienfertigung preiswerter zu gestalten.

Von Vorteil ist es auch, wenn die Folie transparent oder mindestens transluzent ausgebildet ist, so dass das abgedeckte Material durch die Folie hindurch einer Begutachtung unterzogen werden kann.

Durch Extrusion selbsttragend hergestellte wasserdichte und zugleich atmungsaktive Folie, die zudem ein antistatisches Verhalten zeigt, dadurch gekennzeichnet, dass die Folie eine DIN-Reibzahl kleiner als 0,8 aufweist, ihr Oberflächenwiderstand kleiner 10¹² Ohm beträgt und die Folie aus thermoplastischen Polyurethan-Elastomerharzen besteht, deren Schmelzindex bei 190°C und einer Prüfbelastung von 10 kg höchstens 70 g/10 min, gemessen nach DIN 53 735, beträgt, wobei das Weichsegment dieser Elastomerharze aus Polyethylenoxid besteht und/oder Ethylenoxid-Reaktionsprodukte enthält, ein Kohlenstoff zu Sauerstoff Massenverhältnis von mindestens 1,3 und höchstens 2,5 aufweist und der relative Massenanteil des Weichsegments am Polyurethan-Harz zwischen 35 Massen-% und 60 Massen-% beträgt, jeweils bezogen auf die Gesamtmasse des eingesetzten Polyurethans.

Bevorzugt werden für das Weichsegment A) difunktionelle, d.h. zwei Hydroxylendgruppen enthaltende Verbindungen, Ethylenoxid-Polymerisate und oder Copolymerisate, die oft auch als Polyoxyethylenglycole und/oder Polyethylenoxidglycole bezeichnet werden, deren Monomereinheit durch den Aufbau (-O-CH₂-CH₂)-) gekennzeichnet ist sowie ein mittleres Molekulargewicht von mindestens 400 g/mol und höchstens 2800 g/mol besitzen. In einer besonders bevorzugten Ausführung liegt das mittlere Molekulargewicht zwischen 800 g/mol und 1200 g/mol. Diese sind ferner durch ein Kohlenstoff zu Sauerstoff Massenverhältnis charakterisiert, welches mindestens 1,3 und höchstens 2,5 beträgt. Der Masseanteil des Weichsegments A) an dem thermoplastischen Elastomer, welches die erfindungsgemäße Folie bildet, beträgt zwischen 35% und 60%, bevorzugt zwischen 40% und 50%, jeweils bezogen auf die Gesamtmasse des thermoplastischen Polyurethans. Durch Copolymerisation des Ethylenoxids mit anderen cyclischen Ethem, beispielsweise Propylenoxid oder Tetrahydrofuran, lässt sich die Kristallisationsneigung des Weichsegmentes verringern und die Atmungsaktivität erhöhen.

Die Hartsegment-Bestandteile können aus den für die Produktion von Folienrohstoffen aus thermoplastischen Polyurethanen bekannten Isocyanat- und Diol-Komponenten ausgewählt werden.

Als Diol-Komponente B) kommen kurzkettige bifunktionelle Stoffe zum Einsatz, deren Molekulargewicht zwischen 18 und 350 g/mol beträgt. Als zweiwertige Alkohole sind dies z.B. Ethylenglycol, 1,2-Propylenglycol, 1,4-Butylenglycol, auch als Tetramethylenglycol bezeichnet, 2,3-Butylenglycol, 1,5-Pentandiol, 1,6-Hexandiol, 1,8-Octandiol, ferner Diethylenglycol, Triethylenglycol, Tetraethylenglycol und höhere Polyethylenglycole mit einem Molekulargewicht bis 350 g/mol, Dipropylenglycol und höhere Polypropylenglycole mit einem Molekulargewicht bis 350 g/mol sowie Dibutylenglycol und höhere Polybutylenglycole mit einem Molekulargewicht bis 350 g/mol.

Weitere zur Herstellung der erfindungsgemäß zu verwendenden Polyurethane geeignete niedermolekulare Diole B) mit einem Molekulargewicht bis 350 g/mol sind Esterdiole der allgemeinen Formel

HO-(CH₂)_{y}-CO-O-(CH₂)ₓ-OH

und

HO-(CH₂)ₓ-O-CO-R-CO-O-(CH₂)ₓ-OH,

in denen
- R: einen Alkylenrest mit 1 bis 10, vorzugsweise 2 bis 6, C-Atomen bzw. einen Cycloalkylen- oder Arylenrest mit 6 bis 10 C-Atomen,
- x: 2 bis 6 und
- y: 3 bis 5
bedeuten,
z.B. Adipinsäure-bis-(β-hydroxyethyl)-ester und Terephthalsäure-bis-(β-hydroxyethyl)-ester.

Geeignete Isocyanate C) sind aliphatische, cycloaliphatische, aromatische und heterocyclische Diisocyanate, beschrieben durch die Formel

OCN-Q-NCO

in der
- Q: einen aliphatischen Kohlenwasserstoffrest mit 2 bis 18, vorzugsweise 6 bis 10, C-Atomen, einen cycloaliphatischen Kohlenwasserstoffrest mit 4 bis 15 C-Atomen, oder einen aromatischen oder teilaromatischen Kohlenwasserstoffrest mit 6 bis 15, vorzugsweise 6 bis 13, C-Atomen,
bedeutet.

Solche Diisocyanate sind beispielsweise 1,4-Tetramethylen-diisocyanat, 1,6-Hexamethylendiisocyanat, Cyclohexan-1,3- und -1,4-diisocyanat sowie beliebige Gemische dieser Isomere, Naphthylen-1,5-diisocyanat, 2,4- und 2,6-Toluylen-diisocyanat sowie beliebige Gemische dieser Isomeren, Diphenylmethan-2,4'- und/oder -4,4'-diisocyanat.

In Frage kommende Alkohole D) als Verkappungsreagenzien sind niedermolekulare Alkohole mit einem Molekulargewicht von mindestens 32 g/mol und höchstens 100 g/mol. Es sind nicht nur monofunktionelle Alkohole, sondern auch Di-, Tri- oder höhere Polyole als Verkappungsreagenzien geeignet. Bevorzugt werden aliphatische kurzkettige Alkohole mit einem Molekulargewicht von mindestens 32 g/mol und höchstens 400 g/mol.

Erfindungsgemäß bevorzugt sind Polyurethane, die aufgebaut sind aus
a) einem Ethylenoxid-Reaktionsprodukte enthaltenden Polyether-Weichsegment A) mit einem mittleren Molekulargewicht von mindestens 400g/mol und höchstens 2800 g/mol mit einem Kohlenstoff zu Sauerstoff Massenverhältnis von mindestens 1,3 und höchstens 2,5,
b) einem Kettenverlängerer oder einem Gemisch von Kettenverlängerem B), die als wesentliche Bestandteile kurzkettige aliphatische Diole mit 2 bis 6 Kohlenstoffatomen enthalten,
c) einem aromatischen Diisocyanat mit 15 Kohlenstoffatomen im Molekulargerüst.

In einer besonders bevorzugten Ausführungsform liegt das molare Einsatzverhältnis von Diisocyanat C) zu Kettenverlängerer B) bei 1,3 bis 1,8 und das molare Einsatzverhältnis von Diisocyanat C) zu Weichsegment A) zwischen 3 und 4.

Entscheidend für die einschichtig-selbsttragende, d.h. trägerfreie, Folienherstellung ist, dass das Molekulargewicht ausreichend ist, um den Abzug des Films aus der Schmelze zu gewährleisten. Bei der Verwendung von Polyethylenoxidglycolen setzt dies besondere Sorgfalt bei der Reinigung und der Vortrocknung, bzw. der Verhinderung der Feuchtigkeitsabsorption nach der Reinigung, des für die Polyurethan-Synthese eingesetzten difunktionellen Polyethylenoxids voraus.

Erst die hohe Viskosität der Schmelze gewährleistet auch die nachträgliche thermische Verformbarkeit der Folie, ohne dass die Schmelzebahn abreißt und Löcher entstehen können. Solche Verschweißbarkeit ist für die erfindungsgemäße Folie elementar, da andernfalls die geforderte Dichtigkeit nicht sichergestellt werden kann. Neben dem dichten Verschweißen ist dieses Bahnverhalten auch bei Tiefziehprozessen mit thermischer Materialbeanspruchung unverzichtbar.

Es ist für die Fachwelt nicht naheliegend, dass sich ein derartiges Polyurethan-Harz zu einer selbsttragenden Folie verarbeiten lässt, die eine Wasserdampfdurchlässigkeit von wenigstens 600 g/m²-d, bezogen auf eine 30 µm Folie, gemessen nach DIN 53 122, bei 23°C und 85% relativer Luftfeuchtigkeit, aufweist.

Nicht naheliegend war, dass dieses thermoplastische Polyurethan-Harz sich gut mit Additiven kombinieren lässt, die das Blockverhalten reduzieren, so dass die Folie ein gutes Gleitverhalten, charakterisiert durch eine DIN-Reibzahl von höchstens 0,8, gemessen im Kontakt Folie gegen Metall, besitzt.

Geeignete Antiblockmittel sind beispielsweise mit der Folienmatrix unverträgliche organische Polymerisate oder anorganische Substanzen wie Silikate, Siliciumdioxid und Calciumcarbonat. Als besonders geeignete Antiblockmittel haben sich die anorganischen Substanzen, insbesondere natürliche oder gefällte Alumosilikate mit einer mittleren Teilchengröße zwischen 2 und 10 µm erwiesen. Die Zusatzmenge dieser Antiblockmittel beträgt 1 bis 7 Gew.-%, vorzugsweise 3-5 Gew.-%, bezogen auf das mittlere Foliengewicht.

Ebenso konnte nicht erwartet werden, dass eine solche Folie einen Oberflächenwiderstand von höchstens 10¹² Ohm aufweist.

Die erfindungsgemäße thermoplastische Polyurethanfolie ist zudem leicht verformbar, was durch eine geringe Spannung bei 50% Dehnung deutlich wird. Außerdem weist die Folie ein hohes Rückstellungsvermögen und geringes Hystereseverhalten auf. Durch den Verzicht auf ein Stützgewebe wird eine ausreichend glatte Oberfläche erzielt, die notwendig ist um eine gute Reinigungsfähigkeit der erfindungsgemäßen Folie zu gewährleisten. Die bekannte Blockneigung thermoplastischer Polyurethane lässt sich durch den Einsatz geeigneter Antiblockmittel reduzieren beziehungsweise einstellen.

Aufgrund der günstigeren Prozessführung bei der Herstellung von thermoplastisch verarbeitbaren Polyurethanen durch Polyaddition gegenüber der von Copolyetherestern oder Copolyetherblockamiden durch Polykondensation lassen sich die in der erfindungsgemäßen Folie Anwendung findenden Polyurethane erheblich preisgünstiger produzieren. Die in nur einem weiteren Verarbeitungsschritt produzierte Folie kann somit einem größeren Anwenderkreis zur Verfügung gestellt werden.

Gegenüber Copolyetherestern oder Copolyetherblockamiden weist die erfindungsgemäße Folie zudem den Vorteil auf, dass sie bei Knick- und/oder Reibbewegungen nicht zum Knistern neigt.

Die Verarbeitung des thermoplastischen Polyurethan-Harzes zu Folien ist durch Breitschlitz- oder Blasfolienextrusion möglich. Diese Prozesse sind beispielsweise in Kirk-Othmer. Encyclopedia of Chemical Technology, Bd. 9 (1966) 232-241, beschrieben. Solche Herstellverfahren ermöglichen es, Folien in Dicken von wenigen Mikrometern bis in den Millimeterbereich herzustellen. Gegenüber der Blasfolienextrusion bietet die Breitschlitzextrusion den Vorteil, Folien mit verbesserten Dickentoleranzen und bis zu größeren Dicken herzustellen.

Der Blasfolienprozess wird zur Herstellung der erfindungsgemäßen Folie bevorzugt. Der Preisvorteil der thermoplastischen Polyurethane wird durch das fertigungstechnisch flexiblere Verarbeitungsverhalten dieser Rohstoffe im Vergleich zu Copolyetherestem oder Polyetherblockamiden noch verbessert. Aufgrund eines langsameren Ausbildens der Domänen aus den das Hartsegment bildenden Isocyanat-Gruppen lässt sich das Aufblasverhältnis des Folienschlauches im Blasfolienverfahren sehr flexibel handhaben, so dass bei vorgegebenem Düsendurchmesser ein breiteres Spektrum an Folienbreiten herstellbar ist und damit eine kostengünstige Verarbeitung möglich wird.

Zur Verbesserung von Gebrauchseigenschaften können die erfindungsgemäßen Folien mit Farb- und/oder Funktionsadditiven in den für Kunststoffe üblichen Konzentrationen ausgerüstet werden. Hierzu zählen bevorzugt Carbonsäureamide wie Erucasäureamide, Stearinsäureamide und Palmitinsäureamide oder Polydiorganosiloxane aber auch Fluorelastomere und anorganische Gleitmittel wie Molybdändisulfid sowie auch Salze der Stearinsäure. Außerdem können wasserlösliche Polyether oder auch natürliche Triglyceride als Gleitmittel verwendet werden.

Durch Zugabe von geeigneten Additiven, die mit dem die erfindungsgemäße Folie bildenden Polyurethan-Harz verträglich sind, beispielsweise organischen Phosphaten lässt sich die Wasserdampfdurchlässigkeit der erfindungsgemäßen Folie noch weiter steigern. Additive für Kunststoffe sind beispielsweise von Gächter/Müller beschrieben in: Kunststoff-Additive, Carl Hanser Verlag München, 3. Ausgabe (1989), S. 779-805.

Um die Eigenschaften der Folien dauerhaft zu erhalten, können diese stabilisierende Zusätze in jeweils wirksamen Mengen enthalten. Vorzugsweise sind dies Photostabilisatoren und/oder Antioxidantien und/oder Hydrolysestabilisatoren.

Zur Photostabilisierung eignen sich Licht-absorbierende Substanzen, insbesondere kommen UV-Licht-absorbierende Benzoate und/oder Phenylsalicylate aber auch Benzotriazole zum Einsatz. Als weitere Möglichkeit der Photostabilisierung bietet sich die Verwendung von Quenchem an, vorzugsweise von Nickel-Organyl-Chelaten und/oder Nickel-Dithiocarbamaten.

Als Antioxidantien werden sogenannte primäre Antioxidantien, durch Substitution am Stickstoff sterisch gehinderte sekundäre Amine, und/oder gehinderte Phenole und auch sekundäre Antioxidantien, wie Thioether, Phosphite oder Phosphonite oder synergistische Mischungen primärer und sekundärer Antioxidantien genutzt.

Geeignete Hydrolysestabilisatoren sind Carbodiimide, besonders deren Ausführungen als nicht extrahierbare Polycarbodiimide ebenso wie Hydroxyethyl-Hamstoffe.

Die hier für Polyurethane angesprochenen Stabilisatorsysteme werden beispielsweise von einer Reihe Autoren unter anderem Graff, Leaversuch und Rogers, in: Modern Plastics International 22 (1992) 9 auf den Seiten 55-78 beschrieben.

Die Oberflächeneigenschaften werden mit einer der üblichen Vorbehandlungsmethoden nach dem Erkalten der Folie, vorzugsweise aber vor dem Aufwickeln eingestellt. Zu den geeigneten Methoden zählen Flammbehandlung, Plasmabehandlung und im besonderen Maße die elektrische Coronavorbehandlung.

Bei der Coronavorbehandlung wird-zweckmäßigerweise so vorgegangen, dass die-Folie zwischen zwei als Elektroden dienenden Leiterelementen hindurchgeführt wird, wobei zwischen den Elektroden eine so hohe Spannung - üblicherweise Wechselspannung von etwa 10 kV mit einer Frequenz von 10 kHz - anliegt, dass Sprüh- oder Coronaentladungen stattfinden können. Durch diese Entladungen wird die Luft entlang der Folienoberfläche ionisiert, so dass es zu Reaktionen an der Folienoberfläche kommt, bei denen im Vergleich zu der Polymermatrix polarere Gruppen entstehen. Die notwendige elektrische Leistung beträgt typischerweise etwa 10-20 Wmin/m². Die für die Vorbehandlung der erfindungsgemäßen Folien benötigten Behandlungsintensitäten liegen hierbei im üblichen Rahmen, wobei Behandlungsintensitäten bevorzugt sind, die Oberflächenspannungen von 42-50 mN/m ergeben.

Im folgenden wird die Erfindung anhand von Beispielen noch näher erläutert, ein Vergleich der Beispiele erfolgt in Tab. 1.

### Beispiel 1

Ein thermoplastisches Polyurethan mit einem Schmelzflussindex (MFR) von 67 g/10 min, gemessen bei 190° mit einer Prüfmasse von 10 kg, wurde aus den Komponenten Diphenylmethan-4,4'-diisocyanat, 1,4-Butandiol und Polyethylenoxidglycol mit einer mittleren Molmasse von 800 g/mol hergestellt. Die Massenanteile der Komponenten lagen bei 42% Polyethylenoxidglycol, 47% Diisocyanat und 11% Butandiol. Dem Polyurethan wurden 3 Massen-% einer natürlichen Kieselsäure mit Korngrößen zwischen 3 µm und 7 µm und 1 Massen-% eines Amidwachses zugesetzt, jeweils bezogen auf die Gesamtmenge der zur Folienherstellung eingesetzten Komponenten.

Das Material wurde mit einem Einschneckenextruder bei angeflanschtem Blasfolienwerkzeug zu Folie verarbeitet. An dem Extruder mit einem Durchmesser von 45 mm wurden aufsteigende Temperaturen von 150-180°C eingestellt. Die Düsentemperatur betrug 185°C.

### Beispiel 2

Ein thermoplastisches Polyurethan mit einem MFR von 27 g/10 min, gemessen bei 190°C mit einer Prüfmasse von 10 kg wurde aus den Komponenten Diphenylmethan-4,4'-Diisocyanat, Polyethylenoxidglycol mit einer mittleren Molmasse von 100 g/mol und 1,4-Butandiol hergestellt. Die Massenanteile der Komponenten lagen bei 47,5% Polyethylenoxidglycol, 42,5% Diisocyanat und 10% Butandiol.

Dem Polymer wurden 5 Massen-%, bezogenauf die Gesamtmasse der zur Folienverarbeitung eingesetzten Komponenten, einer natürlichen Kieselsäure mit Korngrößen zwischen 3 µm und 7 µm zugesetzt.

Die Verarbeitung zu Folie erfolgte unter den in Beispiel 1 angegebenen Bedingungen.

### Beispiel 3

Ein thermoplastisches Polyurethan mit einem MFR von 30 g/10 min, gemessen bei 190°C mit einer Prüfmasse von 10 kg, wurde aus den Komponenten Diphenylmethan-4,4'-diisocyanat, 1,4-Butandiol und Polyethylenoxidglycol mit einer mittleren Molmasse von 900 g/mol hergestellt. Zum Verkappen der Endgruppen wurde Triethylenglycol eingesetzt. Die Massenanteile der Komponenten lagen bei 45% Polyethylenoxidglycol, 44% Diisocyanat, 10% Butandiol und 1% Verkappungsreagenz.

Dem Polymer wurden 5 Massen-% einer synthetischen Kieselsäure mit Korngrößen zwischen 4 um und 6 µm sowie 2 Massen-% eines Amidwachses zugesetzt, jeweils bezogen auf die Gesamtmenge der zur Folienherstellung eingesetzten Komponenten. Die Verarbeitung zu Folie erfolgte analog zu Beispiel 1.

### Vergleichsbeispiel

Ein handelsübliches thermoplastisches Polyurethan mit einem MFR von 17 g/min, gemessen bei 190°C mit einer Prüfinasse von 10 kg, aufgebaut aus den Komponenten Diphenylmethan-4,4'-diisocyanat, 1,4-Butandiol und Polybutylenadipat und charakterisiert durch eine Shore-A-Härte von 90 wurde unter Beimengung von 7 Massen-% einer natürlichen Kieselsäure mit Korngrößen zwischen 3 µm und 7 µm und mit 2 Massen-% eines Amidwachses zu Folie verarbeitet. Es wurde das in Beispiel 1 beschriebene Werkzeug eingesetzt.

### Vergleichsbeispiel 2

Ein thermoplastisches Polyurethan wurde wie in Beispiel 1 beschrieben hergestellt. Die Folienverarbeitung erfolgte jedoch ohne Zugabe von Kieselsäure und Amidwachs.

**Tabelle 1**

| | Einheit | Beispiel 1 | Beispiel 2 | Beispiel 3 | Vergleichsbeispiel 1 | Vergleichsbeispiel 2 |
|---|---|---|---|---|---|---|
| Foliendicke | µm | 50 | 20 | 40 | 40 | 40 |
| elektrischer Oberflächenwiderstand | Ohm | 3*10¹¹ | 6*10¹⁰ | 5*10¹¹ | 1,3*10¹³ | 5*10¹⁰ |
| Wasserdampfdurchlässigkeit | g/(m²24h) | 438 | 1120 | 635 | 95 | 591 |
| Reißfestigkeit | N/mm² | 29,1 | 25,0 | 32,5 | 64,8 | 30,3 |
| Reißdehnung | % | 461 | 339 | 518 | 452 | 631 |
| Spannung bei 50% Dehnung | N/mm² | 5,7 | 5,0 | 5,3 | 7,9 | 5,6 |
| Weiterreißfestigkeit | N/mm | 61,6 | 49,3 | 65,1 | 78,2 | 67,6 |
| Reibzahl | | 0,59 | 0,7 | 0,65 | 0,44 | <1 |

Aus Tabelle 1 lässt sich ersehen, dass die erfindungsgemäßen Folien im Hinblick auf das geforderte Eigenschaftsprofil den aus-bekannten Rohstoffen für die Herstellung von thermoplastischen Urethan-Folien hergestellten Folien überlegen ist. Die Wasserdampfdurchlässigkeit konnte gegenüber der Vergleichsfolie deutlich gesteigert werden. Durch ihren antistatischen Charakter verhindert sie die plötzliche Entladung von beispielsweise durch Reibungsvorgänge aufgebauten, statischen, elektrischen Aufladungen. Die geringe Spannung bei 50% Dehnung unterstreicht die Fähigkeit der erfindungsgemäßen Folien, sich leicht an äußere Beanspruchungen anzupassen. Die erfindungsgemäße Zugabe von organischen und anorganischen Additiven ermöglicht die Einstellung eines blockfreien Reibverhaltens.

### Bestimmung der Wasserdampfdurchlässigkeit

Die Wasserdampfdurchlässigkeit wurde gemäß DIN 53 122 bestimmt. Sie erfolgte bei einer Temperatur von 23°C und einer relativen Luftfeuchtigkeit von 85%.

### Bestimmung der Weiterreißfestigkeit

Die Bestimmung der Weiterreißfestigkeit erfolgte nach DIN 53 515. Als Prüfkörper wurden Winkelproben mit Einschnitt nach ISO 34, Methode B verwendet. Die Proben wurden im 90° Winkel zur Abzugsrichtung der Folienbahn entnommen.

### Bestimmung von Reißfestigkeit, -dehnung sowie der Spannung bei 50% Dehnung

Reißfestigkeit, -dehnung und Spannung bei 50% Dehnung wurden nach DIN 53 455 ermittelt. Hierbei wurden Prüfstreifen mit einer Einspannlänge von 100 mm verwendet. Die Proben wurden im 90° Winkel zur Abzugsrichtung aus der Folienbahn entnommen.

### Bestimmung der Reibungszahl

Die dimensionslose Reibungszahl wurde nach DIN 53 375 bestimmt. Sie wurde im Kontakt Metall/Folie ermittelt.

### Bestimmung des elektrischen Oberflächenwiderstands

Die Bestimmung des elektrischen Oberflächenwiderstands erfolgte nach DIN 53 482, Elektrodenanordnung A. Die Prüfung erfolgte mit einer Prüfspannung von 500 V.

### Bestimmung des Schmelzindexes

Der Schutzindex (MFR) wurde nach DIN 53 735, Verfahren A, bei einer Prüftemperatur von 190°C und einer Belastung von 10 kg bestimmt.

## Patentansprüche

1. Durch Extrusion selbsttragend hergestellte wasserdichte und zugleich atmungsaktive Folie, die zudem ein antistatisches Verhalten zeigt, **dadurch gekennzeichnet, dass** die Folie eine DIN-Reibzahl kleiner als 0,8 aufweist, ihr Oberflächenwiderstand kleiner 10¹² Ohm beträgt und die Folie aus thermoplastischen Polyurethan-Elastomerharzen besteht, deren Schmelzindex bei 190°C und einer Prüfbelastung von 10 kg höchstens 70 g/10 min, gemessen nach DIN 53 735, beträgt, wobei das Weichsegment dieser Elastomerharze aus Polyethylenoxid besteht und/oder Ethylenoxid-Reaktionsprodukte enthält, ein Kohlenstoff zu Sauerstoff Massenverhältnis von mindestens 1,3 und höchstens 2,5 aufweist und der relative Massenanteil des Weichsegments am Polyurethan-Harz zwischen 35 Massen-% und 60 Massen-% beträgt, jeweils bezogen auf die Gesamtmasse des eingesetzten Polyurethans.

2. Folie nach Anspruch 1, **dadurch gekennzeichnet, dass** der Schmelzindex des verwendeten Polyurethan-Elastomerharzes bei 190°C und einer Prüfbelastung von 10 kg höchstens 40 g/10 min, gemessen nach DIN 53 735, beträgt.

3. Folie nach Anspruch 1 oder 2, **dadurch gekennzeichnet, dass** der relative Masseanteil des Ethylenoxid-Weichsegments am verwendeten Polyurethan-Harz mindestens 40 Massen-% und höchstens 50 Massen-%, jeweils bezogen auf die Gesamtmasse des eingesetzten Polyurethans beträgt.

4. Folie nach den Ansprüchen 1 bis 3, **dadurch gekennzeichnet, dass** die Folie zusätzlich ausgestattet ist mit einem Anteil von mindestens 0,3 Massen-% und höchstens 1 Massen-% Gleitmittel und Wachsen, jeweils bezogen auf die Masse der für die Folienherstellung eingesetzten Gesamtmischung.

5. Folie nach den Anspüchen 3 oder 4, **dadurch gekennzeichnet, dass** die Folie eine Dicke zwischen 15 µm und 100 µm und in einer bevorzugten Ausführung zwischen 20 µm und 50 µm besitzt.

6. Verwendung einer Folie gemäß den Ansprüchen 1 bis 5 als antistatische Membranfolie mit selektiver Sperrwirkung gegenüber flüssigen und/oder festen Medien bei gleichzeitiger hoher Durchlässigkeit gegenüber Wasser dampf und mit Ableitvermögen von statischer Elektrizität.

7. Verwendung gemäß Anspruch 6 als atmungsaktive Abdeckbahn für textile Flächengebilde.

8. Verwendung gemäß Anspruch 6 zur Herstellung von wasserdichten Textilien.

9. Verwendung einer Folie gemäß Anspruch 6 als atmungsaktive Abdeckbahn von porösen Flächengebilden.

10. Verwendung von Folien gemäß den Ansprüchen 6 und/oder 9 zur Abdichtung von Matratzen gegen Milben, Bakterien und sonstige Mikroorganismen und/oder deren Stoffwechselprodukte.

## Claims

1. Watertight and, at the same time, breathable and antistatic film produced without a support by extrusion, **characterized in that** the film has a DIN friction coefficient of less than 0.8, its surface resistance is less than 10¹² ohm and the film consists of thermoplastic polyurethane elastomer resins whose melt flow index at 190°C under a test load of 10 kg is at most 70 g/10 min, determined according to DIN 53 735, the soft-segment of these elastomer resins consisting of polyethylene oxide and/or containing ethylene oxide reaction products, and having a carbon-to-oxygen weight ratio of at least 1.3 and at most 2.5 and the relative percentage by weight of the soft segment in the polyurethane resin being between 35% by weight and 60% by weight, based in each case on the total weight of the polyurethane used.

2. Film according to Claim 1, **characterized in that** the polyurethane elastomer resin used has a melt flow index, as measured at 190°C under a test load of 10 kg, of at most 40 g/10 min, determined according to DIN 53 735.

3. Film according to Claim 1 to 2, **characterized in that** the relative percentage by weight of the ethylene oxide soft segment in the polyurethane resin used is at least 40% by weight and at most 50% by weight, based in each case on the total weight of the polyurethane used.

4. Film according to Claims 1 to 3, **characterized in that** the film is additionally provided with at least 0.3% by weight and at most 1% by weight of lubricants and waxes, based in each case on the weight of the total mixture used for the film production.

5. Film according to Claim 3 or 4, **characterized in that** the film has a thickness of 15 µm to 100 µm and, in a preferred embodiment, of 20 µm to 50 µm.

6. The use of a film according to Claims 1 to 5 as an antistatic membrane film with a selective barrier effect against liquid and/or solid media combined with high permeability to water vapour and an ability to dissipate static electricity.

7. The use according to Claim 6 as a breathable covering film for sheet-form textiles.

8. The use according to Claim 6 for producing waterproof textiles.

9. The use of a film according to Claim 6 as a breathable covering film for porous sheet-form materials.

10. The use of films according to Claims 6 and/or 9 for sealing mattresses against mites, bacteria and other microorganisms and/or their metabolism products.

## Revendications

1. Feuille étanche à l'eau et en même temps, perméable aux gaz, préparée de manière autoportante par extrusion, qui présente en outre un comportement antistatique, **caractérisée en ce que** la feuille présente un indice de friction DIN inférieur à 0,8, sa résistance superficielle est inférieure à 10¹² Ohm et la feuille consiste en des résines élastomères en polyuréthanne thermoplastique, dont l'indice de fusion à 190°C et sous une charge d'essai de 10 kg se situe à au maximum 70 g/10 minutes, mesuré suivant DIN 53 735, où le segment plastique de cette résine élastomère consiste en du poly(oxyde d'éthylène) et/ou contient des produits de réaction de l'oxyde d'éthylène, présente un rapport massique du carbone à l'oxygène d'au moins 1,3 et au maximum 2,5 et dont la fraction massique relative du segment plastique dans la résine polyuréthanne se situe dans l'intervalle allant de 35% en masse à 60% en masse, chaque fois sur base de la masse totale du polyuréthanne mis en oeuvre.

2. Feuille suivant la revendication 1, **caractérisée en ce que** l'indice de fusion de la résine élastomère en polyuréthanne utilisée à 190°C et sous une charge d'essai de 10 kg se situe à au maximum 40 g/10 minutes, mesuré suivant DIN 53 735.

3. Feuille suivant la revendication 1 ou 2, **caractérisée en ce que** la fraction massique relative du segment plastique en oxyde d'éthylène dans la résine polyuréthanne utilisée se situe dans l'intervalle allant d'au moins 40% en masse à au maximum 50% en masse, chaque fois sur base de la masse totale du polyuréthanne mis en oeuvre.

4. Feuille suivant les revendication 1 à 3, **caractérisée en ce que** la feuille est munie en outre, d'une fraction d'au moins 0,3% en masse et d'au maximum 1% en masse de lubrifiant et de cires, chaque fois sur base de la masse du mélange total mis en oeuvre pour la préparation de la feuille.

5. Feuille suivant la revendication 3 ou 4, **caractérisée en ce que** la feuille présente une épaisseur allant de 15 µm à 100 µm et dans une réalisation préférée, allant de 20 µm à 50 µm.

6. Utilisation d'une feuille suivant les revendications 1 à 5, comme feuille membranaire antistatique avec un effet barrière sélectif vis-à-vis des milieux liquides et/ou solides pour simultanément, une perméabilité élevée par rapport à la vapeur d'eau et avec un pouvoir de décharge de l'électricité statique.

7. Utilisation suivant la revendication 6, comme bande protectrice perméable au gaz pour structures surfaciques textiles.

8. Utilisation suivant la revendication 6, pour la préparation de textiles étanches à l'eau.

9. Utilisation d'une feuille suivant la revendication 6, comme bande protectrice perméable aux gaz de structure surfaciques poreuses.

10. Utilisation de feuilles suivant les revendications 6 et/ou 9, pour étanchéifier des matelas contre les acariens, bactéries et certains microorganismes et/ou leurs métabolites.
